# EUROPEAN PATENT APPLICATION

(11) **EP 4 109 381 A1**
(43) Date of publication of application: **28.12.2022**
(21) Application number: 21776878.7
(22) Date of filing: 22.03.2021
(51) Int. Cl.: G06Q 50/12, G06Q 20/20, B25J 11/00

(54) **INTERWORKING METHOD FOR ORDER SYSTEM AND MOBILE ROBOT, AND SYSTEM THEREFOR**

(30) Priority: 25.03.2020 KR 20200036485; 15.03.2021 KR 20210033117
(71) Applicant: Woowa Brothers Co., Ltd., Seoul 05544 (KR)
(72) Inventor: LIM, Ji Won, Seoul 05224 (KR); KIM, Myung Sik, Suwon-si, Gyeonggi-do 16509 (KR); KIM, Min Soo, Seoul 05349 (KR)
(74) Representative: Flügel Preissner Schober Seidel
(86) International application number: PCT/KR2021/003505
(87) International publication number: WO 2021/194191

(57) **Abstract**

Disclosed are an interworking method for an order system and a mobile robot, and a system therefor. An interworking method for an order system and a mobile robot, according to an embodiment of the present invention, comprises: a step in which the mobile robot receives any one piece of order information selected from pieces of order information input by means of the order system, wherein the order information includes destination information and loaded object information; a step of, when a loaded object is loaded on the mobile robot, specifying a transport destination on the basis of the destination information included in the order information already received; and a step in which the mobile robot starts driving for transportation to the specified transport destination.

## Description

### Technical Field

The following description relates to an interworking method of an order system and a mobile robot and a system therefor, and more particularly, to a technical idea that enables the mobile robot to move to a destination (e.g., an order table, etc.) where the mobile robot is required without a separate input by a clerk, and to perform customer service such as explanation of menus, by allowing the mobile robot (e.g., a serving robot) to interwork with an order system such as a point of sales (POS) system that manages order information in a store and information required during serving or closing to be automatically delivered.

### Background Art

With development of autonomous driving and robot technology, mobile robots capable of moving by themselves are widely known, and in particular, research is being actively conducted to serve food in stores such as restaurants with a serving robot.

A mobile robot such as the serving robot travels along a predetermined path in a store on behalf of a person, or recognizes obstacles on the traveling path, loads a predetermined load (e.g., cooked food), and serves customers.

Conventionally, a method in which, when a clerk loads the mobile robot with food and then directly inputs information about a table where the food is ordered, the mobile robot serves food according to the input information is mainly used.

In this case, there is an issue in that the food may be served to a table other than the table where the the food is ordered due to an input mistake of the clerk.

In addition, the clerk may deliver various information such as menu information and precautions to customers, but the mobile robot only performs simple food serving. There is an issue in that efficiency is limited by the introduction of mobile robots since customer service, payment and order management in addition to simple serving still have to be managed by humans.

Therefore, a technical idea is required that enables the mobile robot to receive order information or payment information from the order system and to automatically perform necessary actions such as serving and table arrangement without the clerk directly inputting necessary information into the mobile robot by allowing the order system in the store to interwork with the mobile robot.

In addition, a technical idea that may improve the quality of service due to the introduction of the mobile robot by enabling the mobile robot to deliver detailed information on the menu ordered by the customer after the mobile robot arrives at the customer's table, if necessary, is required.

### [Prior Art Document]

### [Patent Document]

(Patent Document 1) Korean Patent (Registration No. 10-1083700, "Robot System for Restaurant Serving")

### Disclosure of the Invention

### Technical Goals

An object to be solved by the present disclosure is to provide a technical idea that enables the mobile robot to receive order information and/or payment information from an order system and automatically perform an operation for serving and closing without the clerk directly inputting necessary information to the serving robot by allowing the mobile robot to interwork with the order system.

In addition, an object of the present disclosure is to provide a technical idea capable of improving the service quality according to the introduction of the mobile robot by delivering detailed information on the menu ordered by the customer after the mobile robot arrives at the customer's table, if necessary.

### Technical Solutions

An interworking method of an order system and a mobile robot according to an example embodiment for solving the technical issues includes receiving, by the mobile robot, one piece of order information selected from pieces of order information input through the order system, the order information including destination information and load information, when the mobile robot is loaded with a load, specifying a transport destination to which the load is to be transported based on the destination information included in the order information received in advance, and starting, by the mobile robot, traveling for transport to the specified transport destination.

In addition, the interworking method of the order system and the mobile robot may further include transmitting, by the mobile robot, completion information indicating that transport of the load is completed to the order system, after the load is received at the transport destination.

In addition, the interworking method of the order system and the mobile robot may further include, when a plurality of loads are included in the load information, checking whether all of the plurality of loads are loaded and the starting, by the mobile robot, of traveling for transport to the specified transport destination may include automatically starting, by the mobile robot, traveling according to a result of the checking.

In addition, the interworking method of the order system and the mobile robot may further include when a plurality of loads are included in the load information, receiving, by the mobile robot, a partial transport signal, and the starting, by the mobile robot, of traveling for transport to the specified transport destination may include starting, by the mobile robot, traveling regardless of whether the plurality of loads are loaded when the partial transport signal is input.

In addition, the interworking method of the order system and the mobile robot may further include, when transport of some loads of the plurality of loads is completed according to the partial transport signal, waiting for, by the mobile robot, transport of remaining loads except for the some loads for which transport is completed in the order information.

In addition, the starting, by the mobile robot, of traveling for transport to the specified transport destination may include selectively controlling, by the mobile robot, at least one of a moving speed, an acceleration, and a rotational speed of the mobile robot according to the load information included in the order information.

In addition, the interworking method of the order system and the mobile robot may further include outputting predetermined guide information when the mobile robot arrives at the transport destination.

In addition, the outputting of the predetermined guide information when the mobile robot arrives at the transport destination may include selectively outputting, by the mobile robot, guide information according to a type of the load included in the order information.

In addition, the outputting of the predetermined guide information when the mobile robot arrives at the transport destination may include selecting and outputting, by the mobile robot, guide information in a language corresponding to a nationality of an orderer.

In addition, the selecting and providing, by the mobile robot, of the guide information in the language corresponding to the nationality of the orderer may include obtaining, by the mobile robot, language information from the order information or a user terminal, and determining, by the mobile robot, the language corresponding to the nationality of the orderer based on the obtained language information.

In addition, the interworking method of the order system and the mobile robot may include receiving, by the mobile robot, an arrangement preparation signal from the order system, the arrangement preparation signal including information on a destination to be arranged, and moving the mobile robot to an arrangement destination to prepare for arrangement.

In addition, the receiving, by the mobile robot, the arrangement preparation signal from the order system may include receiving, by the mobile robot, the arrangement preparation signal from the order system when payment is completed by the order system or when it is determined that no orderer is at the arrangement destination.

According to another aspect, there is provided a computer program installed in a data processing apparatus and stored in a non-transitory recording medium to perform the above-described method.

An mobile robot for interworking of an order system and the mobile robot according to an example embodiment for solving the technical issues includes a driving part configured to move the mobile robot, a loading part capable of loading a load, a communication part capable of performing communication with the order system and transmitting and receiving predetermined data, and a controller, wherein the communication part is configured to receive one piece of order information selected from pieces of order information input through the order system, the order information including destination information and load information, and the controller is configured to, when the loading part is loaded with a load, specify a transport destination to which the load is to be transported based on the destination information included in the order information and control the driving part to start traveling for transport to the specified transport destination.

In addition, the controller may be configured to control the communication part such that the mobile robot transmits completion information indicating that transport of the load is completed to the order system, after the load is received at the transport destination.

In addition, the controller may be configured to, when a plurality of loads are included in the load information, check whether all of the plurality of loads are loaded in the loading part, and control the driving part to automatically start traveling according to a result of the checking.

In addition, the communication part may be further configured to, when the plurality of loads are included in the load information, receive a partial transport signal, and the controller may be configured to, when the partial transport signal is received, control the driving part to start traveling while the loading part is loaded with only some loads of the plurality of loads.

In addition, the controller may be configured to, when transport of the some loads of the plurality of loads is completed according to the partial transport signal, control the driving part to wait for transport of remaining loads except for the some loads for which transport is completed.

In addition, the controller may be configured to output predetermined guide information when the mobile robot arrives at the transport destination.

In addition, the controller may be configured to selectively output guide information according to a type of the load included in the order information, or select and output guide information in a language corresponding to a nationality of an orderer.

In addition, the controller may be configured to selectively control at least one of a moving speed, an acceleration, and a rotation speed of the mobile robot according to the load information included in the order information.

An order system for interworking of the order system and a mobile robot according to an example embodiment for solving the technical issues includes a communication module configured to perform communication with at least one mobile robot, an order module configured to receive order information, a payment module configured to perform payment and generating payment information, and a control module, wherein the control module is configured to control the communication module to transmit one piece of order information selected from pieces of order information input through the order module to one mobile robot of the at least one mobile robot, the order information including destination information and load information, and, when the mobile robot is loaded with a load in response to the received order information, a transport destination to which the load is to be transported is specified based on the destination information included in the order information, and traveling for transport to the specified transport destination starts.

### Advantageous Effects

According to an example embodiment of the present disclosure, by allowing the store's order system to interwork with the mobile robot, there is an effect that the efficiency of the mobile robot may be greatly improved by enabling the serving robot to receive order information and/or payment information from the order system and automatically perform an operation for serving or closing without the clerk directly inputting necessary information into the mobile robot.

In addition, there is an effect that the mobile robot may provide a more delicate and customer-friendly service by enabling the mobile robot to deliver detailed information about the menu ordered by the customer after the mobile robot arrives at the customer's table, if necessary.

### Brief Description of Drawings

In order to more fully understand drawings recited in the detailed description of the Invention, a brief description of each drawing is provided.
FIG. 1 illustrates a schematic configuration of a system for implementing an interworking method of an order system and a mobile robot according to an example embodiment.
FIG. 2 schematically illustrates a flow of a interworking method of an order system and a mobile robot according to an example embodiment.
FIG. 3 to FIG. 4 are diagrams for explaining an example of a case in which a mobile robot receives order information from an order system according to an interworking method of an order system and a mobile robot according to an example embodiment.
FIG. 5 is a diagram for explaining a process in which an order system updates order information based on information received from a mobile robot according to an interworking method of an order system and a mobile robot according to an example embodiment.
FIG. 6 is a diagram for explaining an example of a case in which a mobile robot receives payment information from an order system according to an interworking method of an order system and a mobile robot according to an example embodiment.
FIG. 7 illustrates a schematic configuration of a mobile robot according to an example embodiment.
FIG. 8 illustrates a schematic configuration of an order system according to an example embodiment.

### Best Mode for Carrying Out the Invention

Since the present invention may be implemented in various forms and may have various example embodiments, specific example embodiments are illustrated in the drawings and described in detail. However, this is not intended to limit the present disclosure to specific example embodiments, and should be understood to include all modifications, equivalents, and substitutes included in the spirit and scope of the present disclosure. In describing the present disclosure, if it is determined that a detailed description of a related known technology may obscure the gist of the present disclosure, the detailed description thereof will be omitted.

Terms such as first, second, and the like may be used to explain various components, but the components should not be limited to the terms. The terms are used only to distinguishing one component from another component.

Terms used in the present application are only used to describe specific example embodiments, and are not intended to limit the present disclosure. The singular forms are intended to include the plural forms unless the context clearly dictates otherwise.

The terms such as "comprise" or "have," when used in this specification, are intended to specify the presence of stated features, integers, steps, operations, elements, components, or a combination thereof, but do not preclude the presence or addition of one or more other features, integers, steps, operations, elements, components, and/or groups thereof.

In addition, in this specification, when any one component 'transmits' data to another component, this means that the component may transmit the data to the other component directly or through at least one other component. Conversely, when one component 'directly transmits' data to another component, it means that the data is transmitted from the component to the other component without passing through still other component.

Hereinafter, the present disclosure will be described in detail focusing on example embodiments with reference to the accompanying drawings. Like reference numerals in each drawing refer to like components.

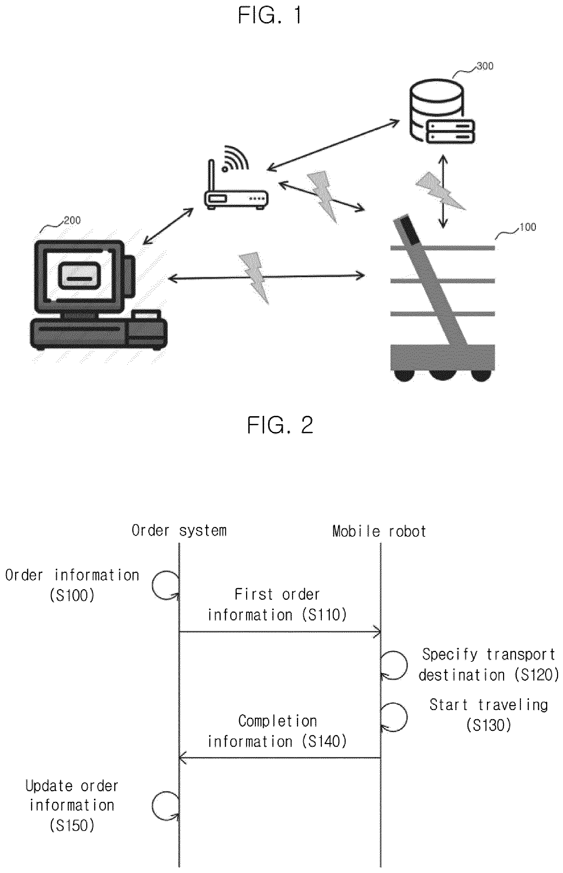

FIG. 1 illustrates a schematic configuration of a system for implementing an interworking method of an order system and a mobile robot according to an example embodiment.

Referring to FIG. 1, in order to implement an interworking method of an order system and a mobile robot according to an example embodiment, an interworking system of the mobile robot and the order system including a mobile robot 100 and an order system that interworks with the mobile robot 100 to transmit and receive predetermined data (hereinafter, referred to as an interworking system) may be provided.

The mobile robot 100 may be referred to a robot capable of moving by including a driving part. For example, the mobile robot 100 may be a robot that may configure a path according to a destination, and travels by itself along the configured path by including an autonomous traveling function.

Hereinafter, a case in which the mobile robot 100 is a serving robot serving food to customers in a predetermined store such as a restaurant will be described as an example, but the scope of the present invention is not necessarily limited thereto. For example, the mobile robot 100 may be implemented as a delivery robot that can load a predetermined item, travel along an outdoor path as well as an indoor such as a store, and deliver the item to a customer or a predetermined destination, and may also be implemented as a robot that moves between floors and performs predetermined tasks (e.g., cleaning, newspaper delivery, etc.).

Also, in an example embodiment, the order system 200 may be referred to the POS provided in a store, such as a restaurant. According to an example embodiment, the order system 200 may include the POS, a predetermined order confirmation system (e.g., a table order order confirmation system of a restaurant, etc.) interworking with the POS, and/or a kitchen display system (KDS). The order confirmation system and/or the KDS is a system that mirrors POS information, and is generally used in the form of a monitor in the kitchen, unlike the POS provided at the checkout counter of a store. In general, the KDS and/or the order confirmation system may exclude the payment function provided in the POS, and may be a system used to check the order information input through the POS in the kitchen and confirm cooking of food (menu), cooking order and the like matching the order information.

If the mobile robot 100 is implemented as a delivery robot, etc., rather than a serving robot, as described above, the order system 200 may be referred to a predetermined transport system that receives order information and/or transportation information for the items to be delivered, and assigns (sends) the items to the delivery robot.

As described above, in the present specification, the case in which the mobile robot 100 is a serving robot and the order system 200 is the POS and/or KDS system provided in a predetermined store is illustrated as an example for convenience of explanation, but the present invention is not necessarily limited thereto.

Also, in the present specification, when the mobile robot 100 interworks with the order system 200, performs communication, and/or transmits and receives predetermined data, it is understood that the mobile robot 100 is connected to at least one system of the POS and/or KDS through a predetermined network to perform communication or to transmit and receive data.

The mobile robot 100 and the order system 200 may be connected in various ways to transmit and receive data necessary to implement the technical idea of the present invention while performing communication.

For example, the mobile robot 100 and the order system 200 may communicate with each other through a wireless network. In this case, the mobile robot 100 and the order system 200 may directly communicate with each other or may communicate through a predetermined access point (AP).

The wireless network may be WiFi, but is not limited thereto, and all wireless-based networks such as a general mobile network may be used for communication between the mobile robot 100 and the order system 200 according to an example embodiment.

Alternatively, the mobile robot 100 and the order system 200 may be connected through a predetermined external server 300 to transmit and receive various data necessary to implement the technical idea of the present invention through the server 300.

The server 300 may be a system managed by a store in which the order system 200 is provided, or included in a system managed by a service subject providing a service according to the mobile robot interworking system according to the present invention.

In any case, according to the present invention, the technical idea of the present invention may be implemented while the mobile robot 100 and the order system 200 interwork to communicate with each other and transmit and receive necessary data.

According to an implementation, when the mobile robot 100 and the order system 200 communicate with each other and interwork as described above, an interface between the mobile robot 100 and the order system 200 may be interlocked.

For example, information (e.g., order information and/or payment information, etc.) of the order system 200 may be checked on a display device (interface) provided in the mobile robot 100, and information input or updated through the mobile robot 100 may be reflected to the order system 200 in real time. For example, as will be described later, when the mobile robot 100 completes serving food to the customer and 'serving complete' processing is performed on the serving robot, order information may be updated by reflecting that serving the food to the corresponding destination (e.g., table) has been completed in the order system 200 as well.

As such, when the mobile robot 100 and the order system 200 interwork to communicate with each other, the effect that services using the mobile robot 100 may be more delicate and diversified may be achieved. Hereinafter, example embodiments of the present invention will be described in detail with reference to the drawings.

FIG. 2 schematically illustrates a flow of an interworking method of an order system and a mobile robot according to an example embodiment.

Referring to FIG. 2, when at least one order information is input (s100) to the mobile robot 100 through the order system 200 in the interworking method of the order system and the mobile robot according to an example embodiment, one selected order information among the input at least one order information may be received from the order system 200 (s110).

According to an example embodiment, the order information may include destination information and/or load information.

The destination information may include information on the destination to which the mobile robot 100 will transport the load, for example, information on the location of the destination and/or destination identification information for identifying the destination. For example, when the mobile robot 100 is the above-described serving robot, the destination information may include information on a table to which the mobile robot 100 have to serve food, for example, an identification number of a table and/or a location of table information. According to an example embodiment, when a plurality of destinations (i.e., tables) exist within a predetermined range such as a store, the mobile robot 100 may have location information for each table in advance and specify a serving table to be served by the mobile robot 100 as a destination by using the identification number of the table included in the order information.

The load information may be referred to information on the load, such as the type of the load, characteristics of the load, and the like. For example, when the mobile robot 100 is a serving robot, the load may be food to be served by the mobile robot 100, and the load information may be referred to menu information for each of the menus in the store. In this case, information on the type of menu and characteristics of each type (e.g., temperature of the menu, whether broth is included, how to eat, etc.) may be included in the menu information. As will be described later, after the mobile robot 100 arrives at the serving table, the menu information may be necessary to output guide information about the menu to the orderer (customer).

According to an implementation, language information on a language corresponding to the nationality of the orderer (customer) may be included in the order information. This may have the effect of providing a more customer-friendly service by enabling the mobile robot 100 to output guide information suitable for the language mainly used by the orderer. This will be described later.

And when the load is loaded, the mobile robot 100 may specify (s120) a transport destination to which the loaded load is transported as described above, based on the destination information included in the order information received in advance.

For example, when the mobile robot 100 is a serving robot, when food cooked from the kitchen is loaded, the mobile robot 100 may specify a serving table to serve the loaded food based on table information included in the order information.

When the transport destination is specified, the mobile robot 100 may start traveling (s130) for transport (e.g., serving) to the specified transport destination (e.g., serving table).

Meanwhile, the mobile robot 100 may specify the transport destination when the load is loaded, but may also specify a transport destination corresponding to the order information received at the time of receiving the order information according to an example embodiment.

Afterwards, when the mobile robot 100 moves to the specified transport destination and serving is completed, the mobile robot 100 may transmit (s140) completion information indicating that the serving is completed to the order system 200. Then, by the order system 200, the completion of the transport to the transport destination may be updated (sI50) in the order information. For example, when the mobile robot 100 loads food and completes serving, and transmits the completion information to the order system 200, the order information may be updated to indicate that serving is completed in the corresponding table.

According to an example embodiment, the mobile robot 100 may differently control the moving speed, acceleration, and/or rotational speed of the mobile robot 100 based on load information included in the order information, in particular, the type of load.

For example, when the type of load included in the order information is food including broth, the mobile robot 100 may have a relatively small acceleration or reduce movement speed compared to other types of load, and may reduce the rotation speed at a corner or a fork in the road to prevent the broth from overflowing from the loaded food.

Conversely, depending on the type of load, the mobile robot 100 may move at the maximum possible moving speed, or may enable movement such as rapid acceleration or rapid deceleration.

In this case, the mobile robot 100 may have the effect of enabling efficient operation and transportation according to the type of load.

Hereinafter, with reference to the drawings, the process according to the interworking method of the order system and the mobile robot of the present invention will be described in detail.

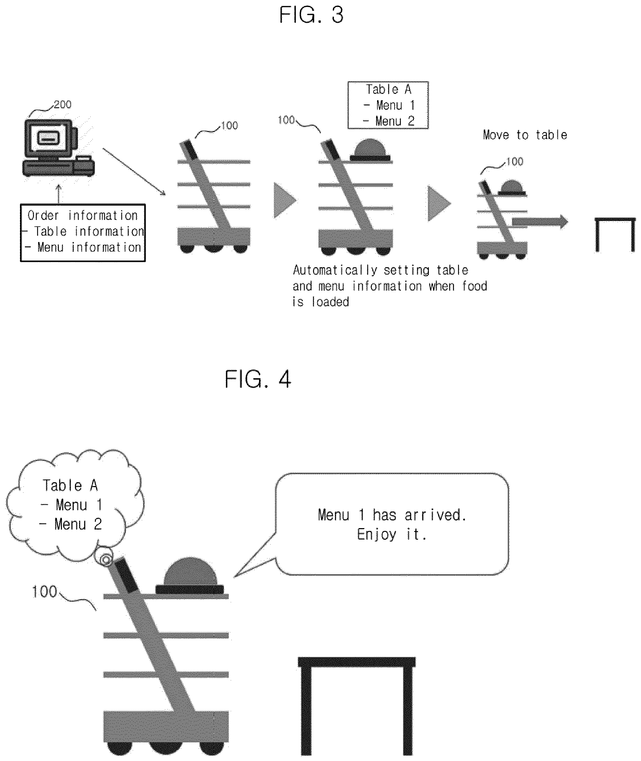

FIG. 3 and FIG. 4 are diagrams for explaining an example of a case in which the mobile robot receives order information from the order system according to the interworking method of the order system and the mobile robot according to an example embodiment.

Referring to FIG. 3 first, the order system 200 may receive at least one piece of order information as described above.

As described above, the load information on the load ordered by the orderer and/or the destination information on a transport destination to which the load is to be transported may be included in the order information.

The order system 200 may transmit (assign) any one piece of order information among at least one piece of order information to any one of the at least one mobile robot 100.

Then, the mobile robot 100 may specify a transport destination based on the destination information included in the order information, and start traveling for transport to the specified transport destination. At this time, the mobile robot 100 may specify the transport destination and start driving after the load is loaded, or specify the transport destination after receiving the order information, and then start traveling when the load is loaded.

According to an example, the case in which the mobile robot 100 starts traveling may be a case in which a traveling signal is received from the order system 200. For example, after the mobile robot 100 is loaded with the load by an employee or a predetermined loading system, a traveling signal may be transmitted to the mobile robot 100 by the order system 200 and the mobile robot 100 may start traveling.

Alternatively, after the employee loads the load onto the mobile robot 100, the employee may directly input the traveling signal to the mobile robot 100.

Meanwhile, according to an example embodiment, there may exist a case in which a plurality of loads are included in the order information.

For example, customers seated at a specific table in a store may order a plurality of menus. In this case, there may be a plurality of loads to be transported (served) to one destination (table).

When there are the plurality of loads corresponding to one destination, the mobile robot 100 may check whether all of the plurality of loads are loaded, and may start traveling for transportation only when the plurality of loads are all loaded as a result of the check.

A method in which the mobile robot 100 checks the loading of a load may be implemented in various ways. For example, an employee who loads the load on the mobile robot 100 may directly input whether to load the load to the mobile robot 100, or information on whether to load inputted by the employee through the ordering system 200 may be transmitted from the ordering system 200 to the mobile robot 100.

In addition, the mobile robot 100 may be provided with a weight sensor capable of detecting the weight of the loads, and when a weight corresponding to the plurality of loads is sensed, the mobile robot 100 may check that all loads are loaded. In this case, the mobile robot 100 may pre-store weight information on the weight of each load or may receive the weight information from the order system 200.

According to another example, the mobile robot 100 may check the loading of the loads from image information captured by a camera installed at a place where the loads are loaded. In this case, the mobile robot 100 or the order system 200 may include a predetermined image analysis system capable of analyzing the image information captured by the camera, or may receive only the image analysis result analyzed by a separate image analysis system.

In any case, when the plurality of loads to be transported to one destination need to be loaded, the mobile robot 100 may check whether all of the plurality of loads are loaded, and transport the loads to be transported to the one destination.

Of course, the plurality of loads may not necessarily be transported at once. In other words, even if the plurality of loads are not all loaded and transported in one mobile robot 100 at once, the mobile robot 100 may transport the plurality of loads several times.

In this case, the mobile robot 100 may receive a partial transport signal from the order system 200. According to an example embodiment, the partial transport signal may be directly input to the mobile robot 100 by the employee.

As such, when the partial transport signal is transmitted to the mobile robot 100, the mobile robot 100 may start traveling for transporting only some loads to the transport destination even if all of the plurality of loads corresponding to the received order information are not loaded.

And when transportation of some loads is completed, the mobile robot 100 may update the order information for transport of the remaining loads except for some loads that have been transported first among the received order information.

According to another example embodiment, the mobile robot 100 may transmit partial completion information to the order system 200 when the transportation of some loads is completed by the partial transportation signal, and the order system 200 may update the information on the load that has been transported and transmit the updated information back to the mobile robot 100.

In this way, when the mobile robot 100 moves to the transport destination by the partial transport signal, the mobile robot 100 may return to the place where the loads are loaded and wait for loading of the remaining loads for loading and transport of the remaining loads after the transport is completed.

Meanwhile, when the mobile robot 100 arrives at the transport destination (e.g., Table A of the drawing), the mobile robot 100 may output predetermined guide information.

According to an example, the guide information may be implemented in the form of voice information. According to an example embodiment, the guide information may be implemented in the form of text information or image information displayed through a display device provided in the mobile robot 100. Of course, text or an image may be displayed through the display device while voice information is output.

The guide information may simply be information indicating that the food ordered by the customer has arrived (e.g., "the food you ordered (menu name) has arrived") as shown in the drawing.

According to an example embodiment, the guide information may be not only the notification of arrival as described above, but also a guide message (e.g., "Be careful as the food is hot", "Be careful not to splash or spill the broth as the broth is hot", "Enjoy it", etc.) about the type (e.g., menu type) or state (e.g., the temperature of the loaded menu, spicyness, etc.) of the loaded loads according to the menu information described above, and may further include a guide message for explaining how to use (for example, information on how to eat the food (e.g., "This menu is more delicious if you eat it with the accompanying XX", etc.).

Alternatively, the guide information may further include a predetermined response message specified in advance according to external conditions (e.g., weather, season, etc.). (For example, if the menu ordered by the customer in summer is cold noodles, "Relieve the heat with cool cold noodles", etc.)

As such, the mobile robot 100 may output various guide information to customers, thereby providing a more sophisticated and detailed service, which may be customer-friendly.

Meanwhile, according to another example embodiment, the guide information output by the mobile robot 100 may be output in various languages.

For example, the mobile robot 100 may output the guide information selected in a language corresponding to the country of the orderer according to the nationality of the orderer. For example, when the nationality of the orderer is the United States, the guide information in English may be selectively output, and when the nationality of the orderer is China, the guide information in Chinese may be selectively output.

To this end, the mobile robot 100 may obtain language information.

The language information may be included in the order information when the order system 200 receives the order information. For example, the order system 200 may include language information when receiving order information.

According to an example embodiment, the order system 200 may get or receive the order information from a predetermined user terminal (e.g., a mobile terminal such as a tablet or a smart phone, etc., and the user terminal may be provided in a store or may be a terminal owned by the user and carried by the user). In this case, a predetermined application for ordering may be pre-installed in the user terminal.

Then, the language information may be known from the country of the orderer set in the application or the language set in the application, and such language information may be included in the order information.

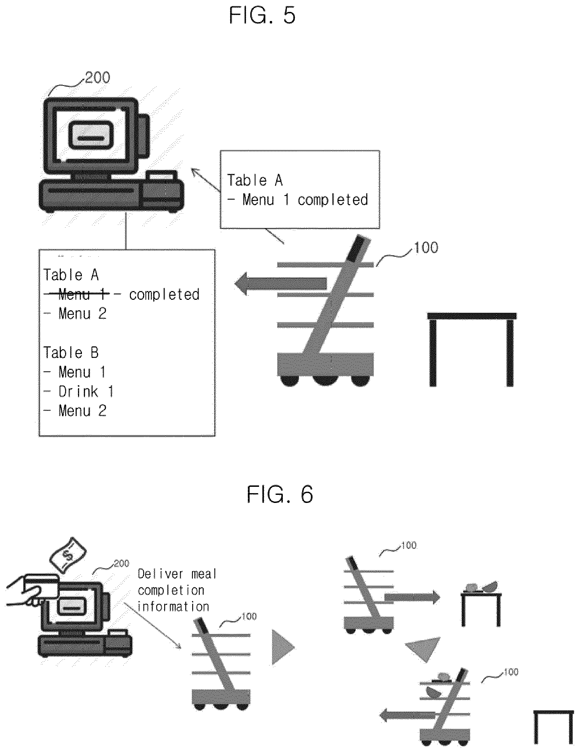

Eventually, when the mobile robot 100 completes all transport to one transport destination, the mobile robot 100 may transmit completion information indicating that transport is completed to the order system 200 as shown in FIG. 5. In addition, the order system 200 may update the corresponding order information according to the completion information transmitted from the mobile robot 100.

Meanwhile, as described above, the mobile robot 100 may obtain information on the type of load from the order information received from the order system 200, and the mobile robot 100 may control the movement speed, acceleration, and/or rotation speed differently according to the type of the load.

For example, when the type of load included in the order information is food including broth, the mobile robot 100 may have a relatively small acceleration or reduce the movement speed compared to other types of load, and reduce the rotation speed at a corner or a fork in the road to prevent the broth from overflowing from the loaded food.

Conversely, according to the type of load, the mobile robot 100 may move at the maximum possible moving speed, or enable movement such as rapid acceleration or rapid deceleration, so that the mobile robot 100 may perform efficient operation and transport according to the type of load.

FIG. 5 is a diagram for explaining a process in which the order system updates order information based on information received from the mobile robot according to the interworking method of the order system and the mobile robot according to an example embodiment.

Referring to FIG. 5, completion information indicating that transport (serving) is completed may be transmitted to the order system 200 from the mobile robot 100 that has completed transport (serving) as described above.

Then, the order system 200 may update the order information by classifying the item (load, in other words, the menu) that serving is completed from the order information served by the mobile robot 100 among at least one piece of order information as serving complete.

In this way, when interworking between the mobile robot 100 and the order system 200 is established, transporting the load of another destination to one transport destination incorrectly (e.g., the menu of another table is incorrectly served on one table) or omission of transportation may be prevented, and it is possible to provide smooth service.

FIG. 6 is a diagram for explaining an example of a case in which the mobile robot receives payment information from the order system according to the interworking method of the order system and the mobile robot according to an example embodiment.

Referring to FIG. 6, the order system 200 may receive payment by the orderer who has completed a meal and receive payment information. The payment information may include information on the location where the menu ordered by the orderer was first served, in other words, the transport destination (e.g., serving table).

In particular, in a store such as a restaurant, when the orderer, in other words, a customer, completes a meal and leaves the store, it may be necessary to arrange empty dishes or leftovers on the table where the customer ate.

Conventionally, there is a difficulty in that an employee has to go to the table in person with a tray, etc., and carry the empty dishes and the like.

According to the technical idea of the present invention, the work efficiency of the employees may increase significantly since the mobile robot 100 may not only transport the load ordered by the first orderer to the transport destination, but also assist the employee for cleaning up in the store as described above.

To this end, the mobile robot 100 may receive an arrangement preparation signal from the order system 200.

The arrangement preparation signal may include the payment information and/or arrangement destination information for the destination included in the payment information.

The mobile robot 100 that receives the arrangement preparation signal may move to the arrangement destination corresponding to the arrangement destination information included in the arrangement preparation signal and perform arrangement preparation.

For example, after customers who have finished eating at a specific table pay and leave, the arrangement preparation signal may be transmitted to the mobile robot 100, and the mobile robot 100 that receives the arrangement preparation signal may move to the specific table and wait. Then, the employees may load items to be arranged, such as empty dishes, on the mobile robot 100, instead of arranging empty dishes on a tray they own as in the prior art.

Thereafter, when the arrangement of the corresponding arrangement destination is completed, the mobile robot 100 may transport the arranged items to a predetermined place which is specified in advance. For example, the mobile robot 100 that completes the arrangement and loads empty dishes may transport the loaded empty dishes to the kitchen.

However, in any case, it may be preferable that the arrangement preparation signal is transmitted to the mobile robot 100 after the orderer (i.e., customer) completely leaves.

For example, the arrangement preparation signal may be transmitted to the mobile robot 100 when payment is completed by the order system 200, or may also be transmitted to the mobile robot 100 when the orderer leaves the store.

In the former case, the order system 200 may receive the payment near the entrance of the store. This is because the payment may be performed after the customer who is the orderer in the transportation destination, in other words, the serving table has already moved to the order system 200.

However, there may be a case where only some of the plurality of customers make a payment and the rest of the customers are waiting at the serving table.

Therefore, as described above, after checking that all customers who are orderers leave from the serving table (transport destination), the mobile robot 100 may receive the arrangement preparation signal.

To this end, as described above, the image information captured through the camera provided in advance may be analyzed, and after it is confirmed that the customers leave outside as a result of the analysis, the arrangement preparation signal may be transmitted to the mobile robot 100.

On the other hand, the mobile robot receiving the arrangement preparation signal may be the same mobile robot 100 as the mobile robot that performed transport according to the first order information to the transport destination corresponding to the arrangement preparation signal, but may be another mobile robot waiting without currently serving among at least one mobile robot. In the present specification, for convenience of explanation, a case in which the mobile robot 100 that has received the first order information also receives the arrangement preparation signal will be described as an example.

Also, the arrangement destination included in the arrangement preparation signal is not necessarily the same as the transport destination where the load was transported according to the first order information. The transport destination and the arrangement destination may be the same, but may be different destinations (e.g., a table) according to a payment order, a customer's exit confirmation order or the like.

In other words, in the present specification, the transportation destination for transportation after ordering and the arrangement destination for arrangement after payment simply may have different names to distinguish the purpose of the destination, and the transportation destination and the arrangement destination may be the same as or different.

In addition, the payment information may also correspond to the first order information, but the payment information may be a payment information corresponding to another order information for another menu in another table other than the payment for the order information initially received by the mobile robot 100. As described in the above-mentioned destination classification, the order information and the payment information received by the mobile robot 100 may not necessarily match one destination (e.g., table).

On the other hand, according to an example embodiment, the mobile robot interworking with the order system 200 may automatically operate according to a predetermined condition as described above, but if necessary, may operate by a control signal controlled through the order system 200.

For example, if cooked food comes out of the kitchen and the mobile robot is located at a distance, the employee may control the mobile robot to move in front of the kitchen counter through the order system 200, for example, the KDS system.

After all, according to the technical idea of the present invention, beneficial effects that may provide a more delicate and customer-friendly service through interworking between the mobile robot 100 and the order system 200 that serve in the store, and improve the work efficiency of the employees may be provided.

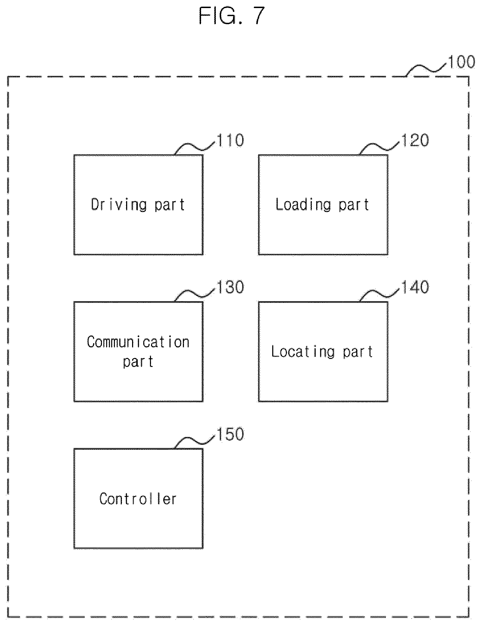

FIG. 7 illustrates a schematic configuration of a mobile robot according to an example embodiment.

Referring to FIG. 7, the mobile robot 100 according to an example embodiment may include a driving part 110 for moving the mobile robot 100, a loading part 120 for loading loads such as food, dishes or the like, a communication part 130 that communicates with the order system 200 and/or the external server 300 and transmits and receives predetermined data, a locating part 140 storing location information of destinations to which the mobile robot 100 will move (e.g. location information by identification number of each table, information on the loading location to load the load, location information on the waiting place when there is no work and the like) and a controller 150 for controlling the operations and functions of the mobile robot 100 and other components.

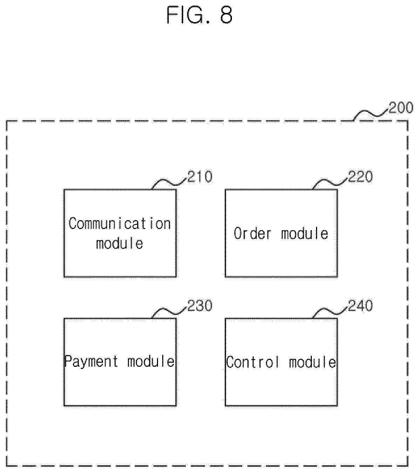

FIG. 8 illustrates a schematic configuration of an order system according to an example embodiment.

Referring to FIG. 8, the order system 200 according to an example embodiment may include a communication module 210 performing communication with the mobile robot 100, the external server 300 and/or a predetermined external system (e.g., a card company system, etc.), an order module 220 for receiving order information, a payment module 230 for performing payment and generating payment information, and/or a control module 240 for controlling functions and resources of other components.

In this specification, a module, part, or -er may be referred to a functional and structural combination of hardware for performing the technical idea of the present invention and software for driving the hardware. For example, the module may mean a logical unit of a predetermined code and a hardware resource for executing the predetermined code, and it may be easily deduced to an average expert in the art of the present invention that the module does not necessarily mean physically connected code or one type of hardware.

For example, the controller 150 and/or the control module 240 may perform the interworking method of the order system and the mobile robot according to the technical idea of the present invention to control the driving or various operations and/or functions of the mobile robot 100 and/or the order system 200. To this end, the controller 150 and/or the control module 240 may include a processor and a memory for storing a program executed by the processor. The processor may include a core processing unit (CPU), graphics processing unit (GPU), microcontroller unit (MCU), accelerated processing unit (APU), microprocessor, single-core CPU, or multi-core CPU. The memory may include high-speed random access memory and may include non-volatile memory such as one or more magnetic disk storage devices, flash memory devices, or other non-volatile solid-state memory devices. Access to memory by the processor and other components may be controlled by a memory controller. Here, when the program is executed by the processor, the program may cause the robot control system 100 according to the present example embodiment to perform the above-described method. Therefore, in the present specification, it is easily deducted to the average expert in the technical field of the present invention that performing a predetermined operation by the mobile robot 100 and/or the controller 150 may be performed by a series of data processing and/or control performed by the processor executing the program.

On the other hand, the interworking method of the order system and the mobile robot according to the example embodiment may be implemented in the form of a computer readable program command and stored in a computer readable recording medium, and the control program and the target program according to an example embodiment may also be stored in the computer-readable recording medium. The computer-readable recording medium includes all types of recording devices in which data readable by a computer system is stored.

The program instructions recorded on the recording medium may be specially designed and configured for the present invention, or may be known and available to those skilled in the art of software.

Examples of the computer-readable recording medium include magnetic media such as hard disks, floppy disks and magnetic tapes, optical media such as CD-ROMs and DVDs, and magneto-optical media such as floptical disks, and hardware devices specially configured to store and execute program instructions, such as ROM, RAM, flash memory, and the like. In addition, the computer-readable recording medium is distributed in a computer system connected to a network, so that the computer-readable code may be stored and executed in a distributed manner.

Examples of the program instruction include not only machine language code such as those generated by a compiler, but also high-level language codes that may be executed by a device for electronically processing information using an interpreter or the like, for example, a computer.

The hardware devices described above may be configured to operate as one or more software modules to perform the operations of the present invention, and vice versa.

The above description of the present invention is for illustration, and those of ordinary skill in the art to which the present invention pertains may understand that the present invention can be easily modified into other specific forms without changing the technical spirit or essential features of the present invention. Therefore, it should be understood that the example embodiments described above are illustrative in all respects and not restrictive. For example, each component described as a singular form may be implemented in a distributed manner, and likewise components described as distributed may be implemented in a combined form.

The scope of the present invention is represented by the following claims rather than the above detailed description, and all changes or modifications derived from the meaning and scope of the claims and their equivalent concepts should be construed as being included in the scope of the present invention.

### Industrial Applicability

The present disclosure may be used in an interworking method of an order system and a mobile robot and a system therefor.

## Claims

1. An interworking method of an order system and a mobile robot, the method comprising:
receiving, by the mobile robot, one piece of order information selected from pieces of order information input through the order system, the order information comprising destination information and load information;
when the mobile robot is loaded with a load, specifying a transport destination to which the load is to be transported based on the destination information included in the order information received in advance; and
starting, by the mobile robot, traveling for transport to the specified transport destination.

2. The method of claim 1, further comprising:
transmitting, by the mobile robot, completion information indicating that transport of the load is completed to the order system, after the load is received at the transport destination.

3. The method of claim 1, further comprising:
when a plurality of loads are included in the load information, checking whether all of the plurality of loads are loaded,
wherein the starting, by the mobile robot, of traveling for transport to the specified transport destination comprises
automatically starting, by the mobile robot, traveling according to a result of the checking.

4. The method of claim 1, further comprising:
when a plurality of loads are included in the load information, receiving, by the mobile robot, a partial transport signal,
wherein the starting, by the mobile robot, of traveling for transport to the specified transport destination comprises
starting, by the mobile robot, traveling regardless of whether the plurality of loads are loaded when the partial transport signal is input.

5. The method of claim 4, further comprising:
when transport of some loads of the plurality of loads is completed according to the partial transport signal, waiting for, by the mobile robot, transport of remaining loads except for the some loads for which transport is completed in the order information.

6. The method of claim 1, wherein the starting, by the mobile robot, of traveling for transport to the specified transport destination comprises,
selectively controlling, by the mobile robot, at least one of a moving speed, an acceleration, and a rotational speed of the mobile robot according to the load information included in the order information.

7. The method of claim 1, further comprising:
outputting predetermined guide information when the mobile robot arrives at the transport destination.

8. The method of claim 7, wherein the outputting of the predetermined guide information when the mobile robot arrives at the transport destination comprises,
selectively outputting, by the mobile robot, guide information according to a type of the load included in the order information.

9. The method of claim 7, wherein the outputting of the predetermined guide information when the mobile robot arrives at the transport destination comprises,
selecting and outputting, by the mobile robot, guide information in a language corresponding to a nationality of an orderer.

10. The method of claim 9, wherein the selecting and outputting, by the mobile robot, of the guide information in the language corresponding to the nationality of the orderer comprises:
obtaining, by the mobile robot, language information from the order information or a user terminal; and
determining, by the mobile robot, the language corresponding to the nationality of the orderer based on the obtained language information.

11. The method of claim 1, further comprising:
receiving, by the mobile robot, an arrangement preparation signal from the order system, the arrangement preparation signal comprising information on a destination to be arranged; and
moving the mobile robot to an arrangement destination to prepare for arrangement.

12. The method of claim 11, wherein the receiving, by the mobile robot, the arrangement preparation signal from the order system comprises,
receiving, by the mobile robot, the arrangement preparation signal from the order system when payment is completed by the order system or when it is determined that the arrangement destination is empty.

13. A computer program installed in a data processing apparatus and stored in a non-transitory recording medium to perform the method according to any one of claims 1 to 12.

14. A mobile robot for interworking of an order system and the mobile robot, the mobile robot comprising:
a driving part configured to move the mobile robot;
a loading part capable of loading a load;
a communication part capable of performing communication with the order system and transmitting and receiving predetermined data; and
a controller,
wherein the communication part is configured to receive one piece of order information selected from pieces of order information input through the order system, the order information comprising destination information and load information, and
wherein the controller is configured to, when the loading part is loaded with a load, specify a transport destination to which the load is to be transported based on the destination information included in the order information and control the driving part to start traveling for transport to the specified transport destination.

15. The mobile robot of claim 14, wherein the controller is configured to control the communication part such that the mobile robot transmits completion information indicating that transport of the load is completed to the order system, after the load is received at the transport destination.

16. The mobile robot of claim 14, wherein the controller is configured to, when a plurality of loads are included in the load information, check whether all of the plurality of loads are loaded in the loading part, and control the driving part to automatically start traveling according to a result of the checking.

17. The mobile robot of claim 16, wherein the communication part is further configured to, when the plurality of loads are included in the load information, receive a partial transport signal, and
the controller is configured to, when the partial transport signal is received, control the driving part to start traveling while the loading part is loaded with only some loads of the plurality of loads.

18. The mobile robot of claim 17, wherein the controller is configured to, when transport of the some loads of the plurality of loads is completed according to the partial transport signal, control the driving part to wait for transport of remaining loads except for the some loads for which transport is completed.

19. The mobile robot of claim 14, wherein the controller is configured to output predetermined guide information when the mobile robot arrives at the transport destination.

20. The mobile robot of claim 19, wherein the controller is configured to selectively output guide information according to a type of the load included in the order information, or select and output guide information in a language corresponding to a nationality of an orderer.

21. The mobile robot of claim 14, wherein the controller is configured to selectively control at least one of a moving speed, an acceleration, and a rotation speed of the mobile robot according to the load information included in the order information.

22. An order system for interworking of the order system and a mobile robot, the order system comprising:
a communication module configured to perform communication with at least one mobile robot;
an order module configured to receive order information;
a payment module configured to perform payment and generating payment information; and
a control module,
wherein the control module is configured to control the communication module to transmit one piece of order information selected from pieces of order information input through the order module to one mobile robot of the at least one mobile robot, the order information comprising destination information and load information, and
wherein, when the mobile robot is loaded with a load in response to the received order information, a transport destination to which the load is to be transported is specified based on the destination information included in the order information, and traveling for transport to the specified transport destination starts.
